Europäisches Patentamt

**European Patent Office**

Office européen des brevets

(19)

(11) **EP 1 498 212 A1**

(12) **EUROPEAN PATENT APPLICATION**

| | |
|---|---|
| (43) Date of publication:<br>**19.01.2005 Bulletin 2005/03** | (51) Int Cl.⁷: **B23K 26/03** |

(21) Application number: **04254194.6**

(22) Date of filing: **14.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Okuda, Mitsuhiro, FANUC Manshonharimomi Minamitsuru-gun, Yamanashi 401-0511 (JP)**<br>• **Furuya, Yoshitake, FANUC Manshonharimomi Minamitsuru-gun, Yamanashi 401-0511 (JP)** |
| (30) Priority: **16.07.2003 JP 2003275338** | (74) Representative: **Billington, Lawrence Emlyn Haseltine Lake, Imperial House, 15-19 Kingsway London WC2B 6UD (GB)** |
| (71) Applicant: **FANUC LTD Minamitsuru-gun, Yamanashi 401-0597 (JP)** | |

(54) **Laser welding unit**

(57)      When a laser beam from a laser welding torch (3) irradiates a surface of a welding target workpiece (5), a plasma (6) is generated. A plasma beam radiated by this plasma (6) is introduced to an optical fiber (4), extracted by a filter-added half-silvered mirror (40), branched by half-silvered mirrors (31, 32) and a reflecting mirror (33), split by bandpass filters (21, 22, 23), and detected by optical sensors (11, 12, 13). Using a detection result of the optical sensors, control for keeping the intensity or the temperature of the plasma (6) constant is exercised.

FIG. 2

EP 1 498 212 A1

Printed by Jouve, 75001 PARIS (FR)

## EP 1 498 212 A1

**Description**

BACKGROUND OF THE INVENTION

1. Field of the Invention

The present invention relates to a laser welding unit. More specifically, the present invention relates to a laser beam machining apparatus that monitors a plasma beam generated in a welding target section.

2. Description of the Related Art

Recently, demand for laser welding is developing in general industrial fields including the automobile industry. Normally, welding conditions of the laser welding tend to change according to a shape and a surface state of a welding target workpiece. It is, therefore, often difficult to maintain welding quality stable. As one of measures to solve this disadvantage, a method of measuring an intensity of a beam emitted from a plasma (hereinafter, "plasma beam") , and of monitoring a welding state while arranging an optical sensor near a welding target section or on a machine tool (a laser machining head) is conventionally performed (see Japanese Patent Application Laid-Open No. 5-77074).
With this conventional method, however, an attitude of the machine tool is restricted because of the arrangement of the optical sensor near the welding target or on the machine tool. In addition, it is difficult to make alignment between a plasma beam emitting section and the optical sensor (beam receiving section), so that monitoring only of the plasma beam emitting section cannot be accurately performed.

SUMMARY OF THE INVENTION

The present invention provides a laser welding unit that can dispense with alignment between a plasma beam emitting section and an optical sensor (a beam receiving section) by improving a conventional laser welding unit that monitors a plasma beam irradiated from a welding target section (a laser beam irradiated section), thereby making it unnecessary to arrange the optical sensor near the welding target section.
According to the present invention, an optical fiber employed for irradiation of a laser beam to a welded section is also employed as a plasma beammonitoring optical path, thereby making it unnecessary to give a restriction to an attitude of a machine tool and to make alignment of the optical sensor to the plasma beam emitting section.
More specifically, the present invention is applied to a laser welding unit including a laser oscillator and an optical fiber for introducing a laser beam emitted from the laser oscillator to a welding tool, and welding a welding target workpiece. According to basic features of the present invention, the laser welding unit comprises at least one optical sensor that detects an intensity of a received beam, and means for introducing the plasma beam emitted from a plasma generated in a laser beam irradiated section on a surface of the welding target workpiece to the optical sensor through the optical fiber. The laser welding unit can also include means for controlling a laser output based on the intensity of the plasma beam detected by the optical sensor. The laser output control can be exercised, for example, so that the intensity of the detected plasma beam is constant.
More preferably, the laser welding is constituted so as to include a plurality of the optical sensors spectral branching means for branching the plasma beam into a plurality of plasma beams, and for allocating the split plasma beams to a plurality of optical paths, respectively, according to a wavelength, and constituted so that the optical sensors detect spectral intensities of the split plasma beams allocated to the respective optical paths, respectively.
In this case, as the spectral branching means, a combination of at least one bandpass filter and at least one optical branching element can be employed. In addition, an emission temperature of the plasma or a light emitting matter that generates the plasma beam may be estimated based on the spectral intensities detected by the plurality of optical sensors.
Further, the laser welding unit may also include a welding condition database, and means for estimating a material of the welding target workpiece based on the detected spectral intensities. Using the welding condition database and the estimating means, the laser welding unit may select a welding condition, under which a predetermined weld penetration is obtained for the estimated material, from the welding condition database, and automatically set the welding condition. The laser welding unit may further include automatic focus setting means for moving the welding tool forward or backward relative to a beam irradiation direction while an output of the welding tool is set constant, and for setting a position, at which the detected intensity of the plasma beam is the highest, as a laser beam focus. Alternatively, the laser welding may further include automatic focus setting means for moving the welding tool forward or backward relative to a beam irradiation direction while an output of the welding tool is set constant, and for setting a position, at which the estimated plasma emission temperature is the highest, as a laser beam focus. In addition, the laser welding unit can be constituted to store data on a plasma emission temperature history of a welding target section

2

and to specify a welding defect position based on the stored data.

According to the present invention, the laser welding unit is constituted as stated above, whereby the plasma beam generated in the welding target section during the laser welding can be monitored with high accuracy. In addition, by exercising laser output control using the high-accuracymonitoring, a stable laser welding quality can be ensured.

BRIEF DESCRIPTION OF THE DRAWINGS

The forgoing and other objects and feature of the invention will become apparent from the following description of preferred embodiments of the invention with reference to the accompanying drawings in which;

Fig. 1 is a block diagram which depicts respective constituent elements of a laser welding unit according to one embodiment of the present invention;

Fig. 2 is an explanatory view for an outline of arrangement of the respective constituent elements of the laser welding unit shown in Fig. 1;

Fig. 3 is a chart which explains spectra of plasma beams generated in a welding target section and detection of spectral intensities by a sensor;

Fig. 4 is a flowchart which explains processings performed by the laser welding unit shown in Fig. 2; and

Fig. 5 is a chart which explains estimation of a welding defect position from a plasma temperature history.

DESCRIPTION OF THE EMBODIMENTS

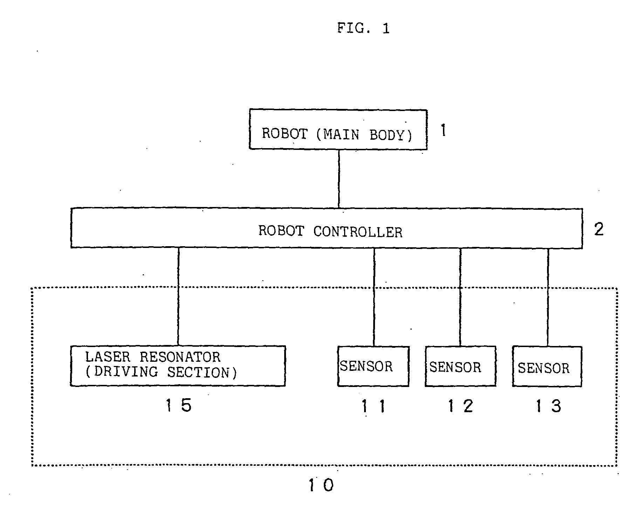

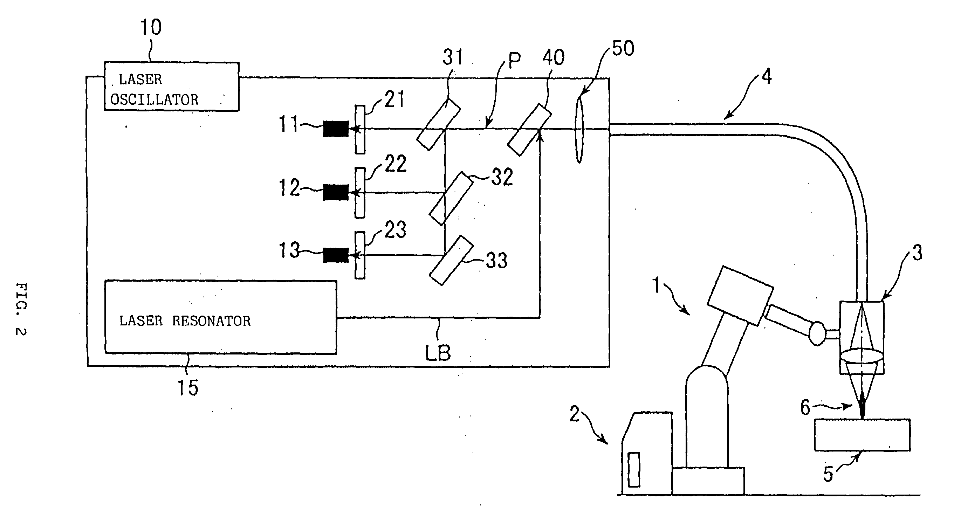

As shown in Figs. 1 and 2, according to one embodiment of the present invention, a laser welding torch 3 is mounted, as a welding tool, on a tip end of an arm of a robot (main body) 1 controlled by a robot controller 2, and a welding target workpiece 5 is welded. A laser beam is supplied to the laser welding torch 3 from a laser oscillator 10 through an optical fiber 4.

When a welding laser beam is irradiated from the laser welding torch 3 onto a surface of a welding target workpiece 5, a plasma 6 is generated in a laser irradiated section, as is well known. According to features of the present invention, a plasma beam radiated by this plasma 6 is picked up via a laser beam irradiation path of the laser welding torch 3 through a laser beam irradiation optical system, and introduced into the optical fiber 4. The plasma beam introduced into the optical fiber 4 is guided in the optical fiber 4, and fed to an optical path provided in the laser oscillator 10 through a collective lens 50.

The optical path provided in the laser oscillator 10 is branched into a laser beam optical path LB and a plasma beam optical path P using a branching half-silvered mirror 40. A laser beam reflected by the surface of the welding target workpiece 5 ("return laser beam") other than the plasma beam is slightly mixed into the beam incident on the laser oscillator 10 through the optical fiber 4. A spectrum of the plasma beam is estimated to slightly change as will be described later. Most of the energy of the plasma beam is derived from a short wavelength side rather than the return laser beam.

It is preferable, therefore, to use a half-silvered mirror 40 which has a highpass filter layer, at the surface thereof, exhibiting a characteristic of allowing a plasma beam to pass through and return laser beam to reflect. The plasma beam path P is branched into three paths using half-silvered mirrors 31 and 32 and a (total) reflecting mirror 33, whereby the plasma beam is split into three beams, and the split three beams are incident on optical sensors 11, 12, and 13 through bandpass filters 21, 22, and 23, respectively.

The bandpass filters 21, 22, and 23 have peak transmission wavelengths of $\lambda 1$, $\lambda 2$, and $\lambda 3$ ($\lambda 1 < \lambda 2 < \lambda 3$), respectively. The wavelengths $\lambda 1$, $\lambda 2$, $\lambda 3$ are normally within a visible light region and, for example, 440 nanometers, 550 nanometers, and 670 nanometers, respectively. The optical sensors 11, 12, and 13 thereby receive substantially single-wavelength beams at the wavelengths of $\lambda 1$, $\lambda 2$, and $\lambda 3$, respectively. According to this, embodiment, the robot controller 2 also functions as a control section of the laser oscillator 10. Therefore, as shown in Fig. 1, the optical sensors 11, 12, and 13 are connected to the robot controller 2, and the intensities (spectral intensities) of the beams at the wavelengths of $\lambda 1$, $\lambda 2$, and $\lambda 3$ are always fetched into the robot controller 2.

The robot controller 2 is connected to a laser resonator 15 in the laser oscillator 10 (a driving section including an exciter lamp and the like), and controls a laser beam output in a manner to be described later. In addition, the robot controller 2 reads an instructed operation program (welding operation program) inside, moves the tool center point of the robot 1 (which normally corresponds to a tip end of the laser welding torch 3) along an operation path designated by the program, and controls the laser beam output (ON/OFF control, level control, or the like) during movement.

In this embodiment, an instance of arranging three optical sensors is shown. Alternatively, only one optical sensor may be arranged. In the alternative, the plasma beam is not split by the respective bandpass filters but an intensity of the plasma beam (intensity of an entire band to which the sensor is sensitive) is detected. Alternatively, in other embodiment, two sets or four or more sets of the optical sensor and the bandpass filter may be arranged.

A relationship between a temperature of the plasma generated in the laser irradiated section and an emission spectrum will now be briefly described. According to basic physics, a spectrum Eb ($\lambda$; T) of a spectral radiation light radiated from a blackbody at an absolute temperature T is given by the following Wien's Formula (1).

$$Eb(\lambda; T) = C1\lambda^{-5}exp(-C2/\lambda T) \qquad (1)$$

In the Formula (1), C1 and C2 are constants referred to as "radiation constants".

Normally, an intensity of an optical energy having an emissivity $\varepsilon$ dependent on a wavelength and a temperature of a measurement target object (the plasma in this embodiment) and having an arbitrary wavelength $\lambda = \lambda p$ is represented by the following Equation (2).

$$Ep(\lambda p; T) = \varepsilon pC1\lambda p^{-5}exp(-C2/\lambda pT) \qquad (2)$$

In the Equation (2) , $\varepsilon p$ denotes the emissivity at the wavelength of $\lambda p$.

For example, at the wavelength $\lambda 1$ of the light detected by the optical sensor 11, the intensity of the optical energy is represented by the following Equation (3) . At the wavelength $\lambda 2$ of the light detected by the optical sensor 12, the intensity of the optical energy is represented by the following Equation (4) .

$$E1(\lambda 1; T) = \varepsilon 1C1\lambda 1^{-5}exp(-C2/\lambda 1T) \qquad (3)$$

$$E2(\lambda 2; T) = \varepsilon 2C1\lambda 2^{-5}exp(-C2/\lambda 2T) \qquad (4)$$

A ratio of these optical energy intensities is given by the following Equation (5).

$$E2/E1 = (\varepsilon 1/\varepsilon 2) (\lambda 1/\lambda 2)^{5}exp\{ (1/\lambda 1-1/\lambda 2)C2/T\} \qquad (5).$$

In the Equation (5), in a range in which the difference between the wavelengths $\lambda 1$ and $\lambda 2$ is small, the wavelength dependency of the emissivity s is ignorable. Therefore, under this condition, the Equation (5) is rewritten to Equation (6).

$$E2/E1 = (\lambda 1/\lambda 2)^{5}exp\{(1/\lambda 1-1/\lambda 2)C2/T\} \qquad (6).$$

The radiation constants C1 and C2 are known values. Therefore, if the intensities detected by the optical sensors 11 and 12 are E1 and E2, and the Equation (6) is reduced for the temperature T, then the temperature T can be obtained. If the wavelength dependency of the emissivity $\varepsilon$ is not ignorable in the Equation (5), then a database of $\varepsilon 2/\varepsilon 1$ corresponding to $\lambda 1$ and $\lambda 2$ is created in advance, stored in a memory of the robot controller 2, and referred to during monitoring, whereby the plasma temperature can be measured.

Likewise, the plasma temperature can be estimated from a ratio of the intensities detected by the optical sensors 12 and 13, for example. If the spectral intensities at the three or more wavelengths are measured as described in this embodiment, two or more energy intensity ratios each between two wavelengths are obtained. Accordingly, two or more plasma temperatures T are calculated. If so, the plasma temperature may be obtained by, for example, averaging these calculated temperatures. According to this embodiment, the temperature T is calculated using the ratios E2/E1 and E3/E2, respectively and the average temperature is calculated. The detected intensities E1, E2, and E3 can be calculated from detected values of the optical sensors 11, 12, and 13, respectively.

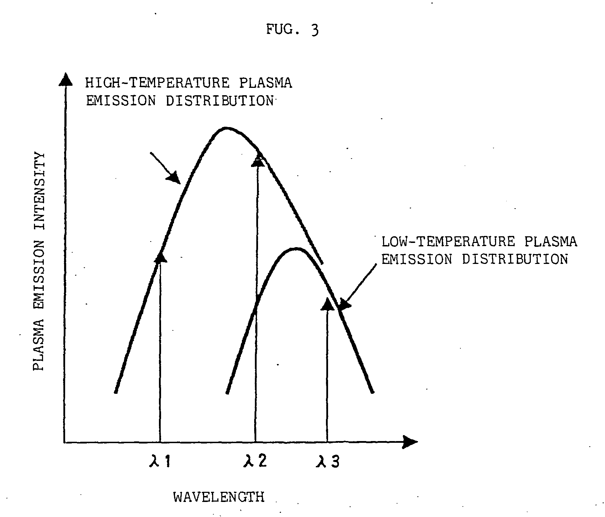

Fig. 3 depicts spectra Eb ($\lambda$; T) when the temperature of the plasma 6 generated in the laser irradiated section is relatively high and a relatively low temperature, respectively. Fig. 3 also conceptually depicts positions.of the wavelengths $\lambda 1$, $\lambda 2$, and $\lambda 3$.

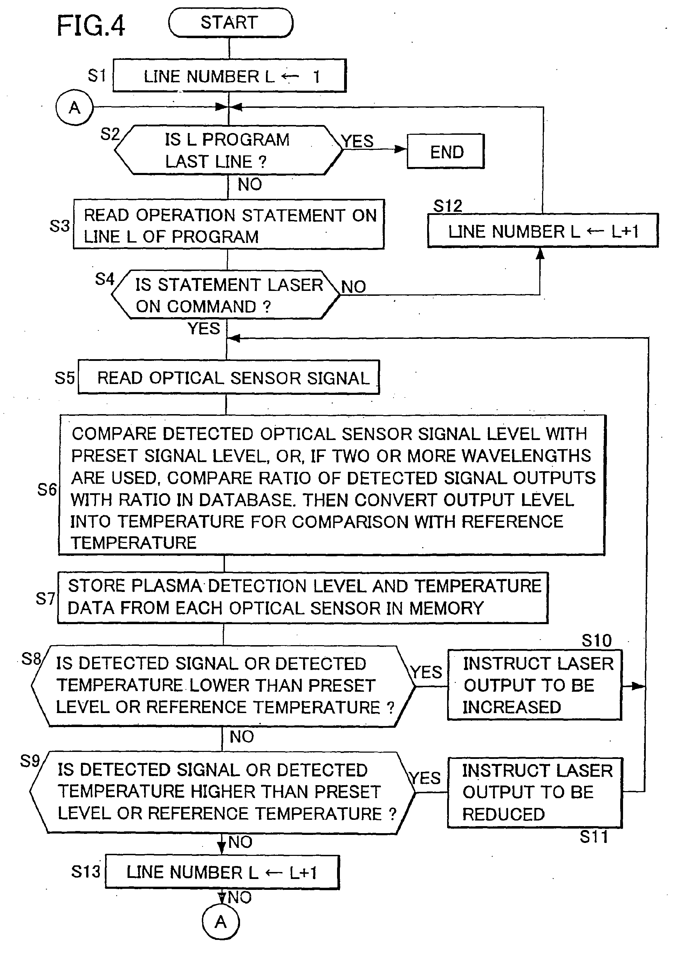

In this embodiment, based on the above-stated respects, laser beam output is controlled while the plasma beam is monitored. during execution of the laser welding. An outline of a control processing flow is shown in the flowchart of Fig. 4.

When the machining apparatus starts operating, a main processor (which corresponds to a CPU of the robot controller 2) starts processing. Respective steps of the processing will be outlined as follows.

Step S1: An index L that represents a line number of the instruction program is set at an initial value of L.

Step S2: It is determined whether the line number is a last line number. If the line number is the last line number, the processing is finished. If not, the processing proceeds to a step S4.

Step S3: An operation statement of the line number designated by the index L is read.

Step S4/step S12: If the statement is a laser ON command, the processing proceeds to a step S5. If not, the processing proceeds to a step S12, at which the index L is incremented by one and the processing returns to the step S2. It is noted that a command (e. g., a command to move the robot 1 to a welding starting point) other than the laser ON command is executed normally. However, since the operation based on the command is not relevant to the present invention, it will not be described herein.

Step S5: The detection signals of the respective optical sensors 11 to 13 (the spectral intensities of the wavelengths $\lambda 1$, $\lambda 2$, and $\lambda 3$) are fetched. If only one optical sensor is employed, the detection signal of the one optical sensor (plasma emission intensity) is fetched.

Step S6/step S7: A signal intensity level is obtained from the detection signal of each optical sensor (one or a plurality of optical sensors), and compared with a preset level. Alternatively, the ratio of the detected spectral intensities at two or more wavelengths may be compared with the value in the database stated above and converted into a temperature, and the converted temperature may be compared with a preset reference temperature. Further, the detection signal level from each sensor, temperature data obtained by conversion, and the like are stored in the memory. At this moment, a time that represents a storage time, data on a present position of the robot 1 or the like is also stored in the memory as label information on each data.

Step S8: If the detected signal intensity level is lower than the preset level or if the converted temperature is lower than the reference temperature, the processing proceeds to a step S10. If not, the processing proceeds to a step S9.

Step S9/step S13: If the detected signal intensity level is higher than the preset level or if the converted temperature is higher than the reference temperature, the processingproceeds to a step S11. If not, the processing proceeds to a step S13, at which the index L is incremented by one and the processing returns to the step S2.

Step S10: The main processor instructs the laser beam output to be increased. For example, a current of an exciter section of the laser resonator 15 is increased by a predetermined value.

Step S11: The main processor instructs the laser beam output to be decreased. For example, the current of the exciter section of the laser resonator 15 is reduced by the predetermined value.

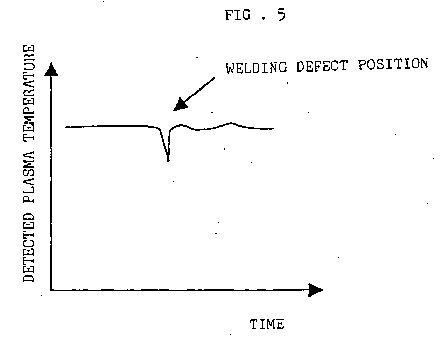

By executing the processing, a control for keeping the laser beam output level constant or a control for keeping the plasma temperature constant is realized while monitoring the plasma beam during execution of the laser welding. It is noted that plasma history data stored in each processing cycle at the step 57 is displayed on a display unit (added to the robot controller 2, not shown) in the form of, for example, a graph shown in Fig. 5.

As depicted by the graph of Fig. 5, when some welding defect occurs, the defect is recorded as a drop of plasma temperature. A position at which the welding defect occurs can be located from a time at which this plasma temperature drop occurs (or from a robot position).

With the configuration in which two or more wavelengths are used in detection, a material is estimated from an emission spectrum distribution detected from the plasma, and laser machining conditions (e.g., reference values used at the steps S7 to S9) optimum for obtaining a predetermined weld penetration for the estimated workpiece, can be selected from the database stored in the memory and automatically set.

Alternatively, the laser welding torch (tool) 3 can be moved in a height direction by operating the robot 1 to emit a laser beam. A height position at which the plasma emission intensity detected by one optical sensor is the highest can be stored and set as a beam focus.

Alternatively, the laser welding torch (tool) 3 can be moved in the height direction by operating the robot 1 to emit a laser beam. Plasma beams split by two or more optical sensors can be measured, and the highest plasma emission temperature can be detected and set as the beam focus.

## Claims

1. A laser welding unit which includes a laser oscillator, and an optical fiber for introducing a laser beam emitted from the laser oscillator to a welding tool, and which welds a welding target workpiece, the laser welding unit comprising:

   at least one optical sensor which detects an intensity of a received beam; and
   means for introducing a plasma beam emitted from a plasma generated in a laser beam irradiated section on a surface of the welding target workpiece to said optical sensor through said optical fiber.

**2.** The laser welding unit according to claim 1, further comprising:

means for controlling a laser output based on the intensity of the plasma beam detected by said optical sensor.

**3.** The laser welding unit according to claim 2, wherein
the laser output is controlled so that the detected intensity of the plasma beam is constant.

**4.** The laser welding unit according to claim 1, further comprising:

spectral branching means for branching said plasma beam into a plurality of plasma beams, and for allocating
the split plasma beams to a plurality of optical paths, respectively, according to a wavelength; and
a plurality of said optical sensors as many as the plurality of optical paths, wherein
the plurality of optical sensors detect spectral intensities of the split plasma beams allocated to the respective
optical paths, respectively.

**5.** The laser welding unit according to claim 4, wherein
said spectral branching means includes at least one bandpass filter and at least one optical branching element.

**6.** The laser welding unit according to claim 4, further comprising:

means for estimating an emission temperature of said plasma based on the spectral intensities detected by
said plurality of optical sensors.

**7.** The laser welding unit according to claim 4, further comprising:

means for estimating a light emittingmatter that generates said plasma beam based on the spectral intensities
detected by said plurality of optical sensors.

**8.** The laser welding unit according to claim 4, further comprising:

a welding condition database;
means for estimating a material of the welding target workpiece based on said detected spectral intensities; and
means for selecting a welding condition, under which a predetermined weld penetration is obtained for said
estimated material, from said welding condition database, and for automatically setting the welding condition.

**9.** The laser welding unit according to claim 1, further comprising:

automatic focus setting means for moving the welding tool forward or backward relative to a beam irradiation
direction while an output of the welding tool is set constant, and for setting a position, at which said detected
intensity of the plasma beam is the highest, as a laser beam focus.

**10.** The laser welding unit according to claim 6, further comprising:

automatic focus setting means for moving the welding tool forward or backward relative to a beam irradiation
direction while an output of the welding tool is set constant, and for setting a position, at which said estimated
plasma emission temperature is the highest, as a laser beam focus.

**11.** The laser welding unit according to claim 6, further comprising:

means for storing data on a plasma emission temperature history of a welding target section; and
means for specifying a welding defect position based on the stored data.

FIG. 1

```
                 ┌─────────────────────────┐  ┌─┐
                 │   ROBOT (MAIN BODY)      │  │1│
                 └─────────────────────────┘  └─┘
                              │
    ┌─────────────────────────────────────────────────────────┐  ┌─┐
    │                  ROBOT CONTROLLER                        │  │2│
    └─────────────────────────────────────────────────────────┘  └─┘
         │                    │        │          │
    ┌ ─ ─│─ ─ ─ ─ ─ ─ ─ ─ ─ ─│─ ─ ─ ─ │─ ─ ─ ─ ─ │─ ─ ─ ─ ─ ┐
    :    │                    │        │          │           :
    : ┌──────────────────┐  ┌──────┐ ┌──────┐ ┌──────┐        :
    : │ LASER RESONATOR  │  │SENSOR│ │SENSOR│ │SENSOR│        :
    : │ (DRIVING SECTION)│  │      │ │      │ │      │        :
    : └──────────────────┘  └──────┘ └──────┘ └──────┘        :
    :       1 5                1 1      1 2      1 3           :
    └ ─ ─ ─ ─ ─ ─ ─ ─ ─ ─ ─ ─ ─ ─ ─ ─ ─ ─ ─ ─ ─ ─ ─ ─ ─ ─ ─ ┘
                              1 0
```

FIG. 2

FUG. 3

# FIG.4

START

S1 LINE NUMBER L ← 1

A

S2 IS L PROGRAM LAST LINE ? — YES → END

NO

S3 READ OPERATION STATEMENT ON LINE L OF PROGRAM

S12 LINE NUMBER L ← L+1

S4 IS STATEMENT LASER ON COMMAND ? — NO

YES

S5 READ OPTICAL SENSOR SIGNAL

S6 COMPARE DETECTED OPTICAL SENSOR SIGNAL LEVEL WITH PRESET SIGNAL LEVEL, OR, IF TWO OR MORE WAVELENGTHS ARE USED, COMPARE RATIO OF DETECTED SIGNAL OUTPUTS WITH RATIO IN DATABASE. THEN CONVERT OUTPUT LEVEL INTO TEMPERATURE FOR COMPARISON WITH REFERENCE TEMPERATURE

S7 STORE PLASMA DETECTION LEVEL AND TEMPERATURE DATA FROM EACH OPTICAL SENSOR IN MEMORY

S8 IS DETECTED SIGNAL OR DETECTED TEMPERATURE LOWER THAN PRESET LEVEL OR REFERENCE TEMPERATURE ? — YES → S10 INSTRUCT LASER OUTPUT TO BE INCREASED

NO

S9 IS DETECTED SIGNAL OR DETECTED TEMPERATURE HIGHER THAN PRESET LEVEL OR REFERENCE TEMPERATURE ? — YES → INSTRUCT LASER OUTPUT TO BE REDUCED S11

NO

S13 LINE NUMBER L ← L+1

NO

A

EP 1 498 212 A1

FIG . 5

WELDING DEFECT POSITION

DETECTED PLASMA TEMPERATURE

TIME

**European Patent Office**

## EUROPEAN SEARCH REPORT

Application Number

EP 04 25 4194

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 41 40 182 A (SEIFERT WOLFGANG) 9 June 1993 (1993-06-09) | 1-3 | B23K26/03 |
| Y | * the whole document * | 4-11 | |
| X | US 5 045 669 A (ORTIZ JR ANGEL L ET AL) 3 September 1991 (1991-09-03) * the whole document * | 1 | |
| Y | DE 101 60 623 A (PRECITEC KG) 12 June 2003 (2003-06-12) * the whole document * | 4-6 | |
| Y | DE 43 13 287 A (FRAUNHOFER GES FORSCHUNG) 27 October 1994 (1994-10-27) | 8 | |
| A | * the whole document * | 4-6 | |
| Y | US 6 069 695 A (EICHER JOCHEN ET AL) 30 May 2000 (2000-05-30) * the whole document * | 7 | |
| A | WO 02/078558 A (BRUGGER WILHELM ; W & H DENTALWERK BUERMOOS GMBH (AT); KASENBACHER ANT) 10 October 2002 (2002-10-10) * the whole document * | 7 | TECHNICAL FIELDS SEARCHED (Int.Cl.7) B23K |
| Y | US 6 355 908 B1 (LIU XINBING ET AL) 12 March 2002 (2002-03-12) * the whole document * | 9,10 | |
| Y | ZIMMERMANN K ET AL: "ASPECTS FOR QUALITY ASSURANCE WITH A PLASMA-MONITORING SYSTEM DURINGLASER BEAM WELDING" LASER IN DER TECHNIK: VORTRAEGE DES INTERNATIONALES KONGRESSES LASER. LASER IN ENGINEERING, 1994, pages 503-510, XP000607667 * the whole document * | 11 | |

-/--

The present search report has been drawn up for all claims

| Place of search | Date of completion of the search | Examiner |
|---|---|---|
| Munich | 15 November 2004 | De Backer, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

## EUROPEAN SEARCH REPORT

European Patent Office

**Application Number**

EP 04 25 4194

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | JURCA M: "ON-LINE MONITOR FOR THE CO2-LASER WELDING PROCESS" LASER IN DER TECHNIK: VORTRAEGE DES INTERNATIONALES KONGRESSES LASER. LASER IN ENGINEERING, 1994, pages 499-502, XP000607668 * the whole document * | 11 | |

TECHNICAL FIELDS SEARCHED (Int.Cl.7)

The present search report has been drawn up for all claims

| Place of search | Date of completion of the search | Examiner |
|---|---|---|
| Munich | 15 November 2004 | De Backer, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 25 4194

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2004

| Patent document cited in search report | | Publication date | Patent family member(s) | | Publication date |
|---|---|---|---|---|---|
| DE 4140182 | A | 09-06-1993 | DE | 4140182 A1 | 09-06-1993 |
| US 5045669 | A | 03-09-1991 | NONE | | |
| DE 10160623 | A | 12-06-2003 | DE | 10160623 A1 | 12-06-2003 |
| DE 4313287 | A | 27-10-1994 | DE | 4313287 A1 | 27-10-1994 |
| US 6069695 | A | 30-05-2000 | AU | 3437697 A | 21-01-1998 |
| | | | CN | 1227632 A | 01-09-1999 |
| | | | DE | 19725520 A1 | 08-01-1998 |
| | | | DE | 59706416 D1 | 21-03-2002 |
| | | | WO | 9800702 A1 | 08-01-1998 |
| | | | EP | 1007948 A1 | 14-06-2000 |
| | | | JP | 2000514180 T | 24-10-2000 |
| | | | KR | 2000022345 A | 25-04-2000 |
| | | | RU | 2191368 C2 | 20-10-2002 |
| WO 02078558 | A | 10-10-2002 | DE | 10115426 A1 | 17-10-2002 |
| | | | WO | 02078558 A1 | 10-10-2002 |
| US 6355908 | B1 | 12-03-2002 | JP | 2000312985 A | 14-11-2000 |

EPO FORM P0459

For more details about this annex : see Official Journal of the European Patent Office, No. 12/82